(19) **Europäisches Patentamt**

**European Patent Office**

**Office européen des brevets**

(11) **EP 0 917 776 B1**

(12) **EUROPEAN PATENT SPECIFICATION**

(45) Date of publication and mention
of the grant of the patent:
**05.07.2006 Bulletin 2006/27**

(51) Int Cl.:
*H04B 10/18* (2006.01)

(21) Application number: **97935667.2**

(86) International application number:
**PCT/GB1997/002131**

(22) Date of filing: **07.08.1997**

(87) International publication number:
**WO 1998/006192 (12.02.1998 Gazette 1998/06)**

(54) **SPECTRAL EQUALIZER USING RECONFIGURABLE HOLOGRAPHIC FILTER**

SPEKTRALER ENTZERRER MIT WIEDERKONFIGURIERBAREM HOLOGRAPHISCHEM FILTER

EGALISATEUR SPECTRAL UTILISANT UN FILTRE HOLOGRAPHIE CONFIGURABLE

(84) Designated Contracting States:
**DE FI FR GB IE IT NL SE**

(30) Priority: **07.08.1996 GB 9616598**

(43) Date of publication of application:
**26.05.1999 Bulletin 1999/21**

(73) Proprietor: **Mears, Robert Joseph
Wellesley, MA 02482 (US)**

(72) Inventors:
  • **MEARS, Robert, Joseph
    Cambridge CB4 2QP (GB)**
  • **COHEN, Adam, David
    Cambridge CB2 1JJ (GB)**
  • **WARR, Stephen, Thomas
    Ipswich IP2 9ET (GB)**
  • **PARKER, Michael, Charles
    Sutton,
    Surrey SM2 5RU (GB)**

(74) Representative: **Legg, Cyrus James Grahame et al
Abel & Imray
20 Red Lion Street
London WC1R 4PQ (GB)**

(56) References cited:
**EP-A- 0 543 314        US-A- 5 436 760**

• **PARKER M C ET AL: "DIGITALLY TUNABLE
WAVELENGTH FILTER AND LASER" IEEE
PHOTONICS TECHNOLOGY LETTERS, vol. 8, no.
8, 1 August 1996, page 1007/1008 XP000621635
cited in the application**
• **KYO INOUE ET AL: "TUNABLE GAIN
EQUALIZATION USING A MACH-ZEHNDER
OPTICAL FILTER IN MULTISTAGE FIBER
AMPLIFIERS" IEEE PHOTONICS TECHNOLOGY
LETTERS, vol. 3, no. 8, 1 August 1991, pages
718-720, XP000223738**

**Description**

This invention related to apparatus for optical communications and, in particular, to spectral equialisers for use with optical fibre amplifiers.

Erbium-doped fibre amplifiers (EDFA) are now well established for telecommunications. To maintain an acceptable spectral bandwidth when many amplifiers are concatenated, the need for passive spectral equalisation has long been recognised. However as wavelength division multiplexed (WDM) optical transmission systems begin to be deployed commercially, the need for active management of spectral gain is increasingly important, since individual channel powers may vary over time and the gain spectrum also varies with dynamic input load. One such active technique employing acousto-optic tunable filters (AOTF) was recently reported by S.H. Huang. X.Y. Zou, A.E. Willner, Z. Bao, and D.A. Smith, "Experimental demonstration of active equalisation and ASE suppression of three 2-5-Gbit/s WDM-network channels over 2500km using AOTF as transmission filters", *Conference on Lasers and Electro-optics*, Paper CMA4, 1996. However, the underlying technology is expensive and requires additional optical components in parallel to attain polarisation insensitivity. The present invention relates to a technique for active management of the spectral gain, based on a polarisation-insensitive diffractive ferroelectric liquid crystal (FLC) in-line filter. The technique is scaleable to tens of channels and is potentially low-cost in volume production.

An alternative gain equalising system is proposed by US patent 5,436,760. At least two dielectric filters are mounted on a rotating device to tune the transmission spectra.

According to the present invention there is provided a spectral equaliser for an optical communication system comprising a number of optical inputs, a number of optical outputs, and a reconfigurable holographic filter arranged in an optical path between the optical inputs and the optical outputs, wherein the reconfigurable holographic filter is configurable to provide signal power equalisation for a number of optical signals or signal channels of predetermined different wavelengths.

There is also provided a reconfigurable holographic filter in combination with processing means storing data on a number of predetermined holograms for configuring the holographic filter, at least one of said holograms being arranged to provide signal power equalisation for a number of optical signals or signal channels of predetermined different wavelengths.

The invention will now be particularly described by way of example, with reference to the accompanying drawings, in which

> Figure 1 is an experimental configuration of apparatus in accordance with a specific embodiment of the invention
> Figure 2 is a graph showing characteristics of an Erbium-doped, fibre amplifier
> Figures 3a and 3b are spectra for two illustrative holograms;
> Figures 4 and 5 are Fourier transforms of the holograms exemplified in Figures 3a and 3b, and
> Figures 6 and 7 are diagrammatic representations of the holograms.

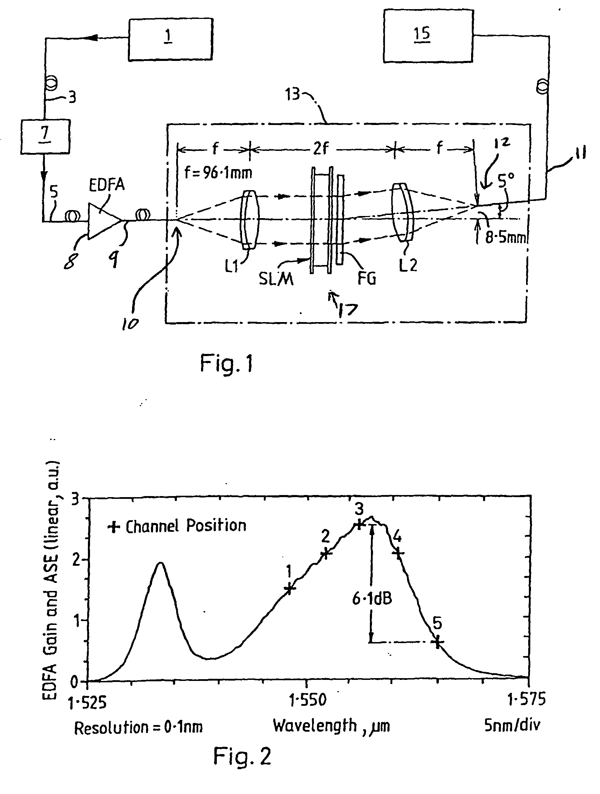

An experimental configuration, employing single-moded fibre throughout, is shown in Figure 1. It comprises a tunable laser 1 coupled by a single-mode fibre 3, 5 and a variable attenuator 7 to and erbium-doped fibre amplifier EDFA. The amplifier is connected by way of monomode fibres 9,11 and an equalising filter 13 an optical spectrum analyser 15.

The equalising filter 13 includes a pair of lenses L1,L2, a transmissive 128x 128 matrix reconfigurable holographic filter SLM of pitch $D = 165\mu m$ and a transmissive fixed grating FG with line pair width $d = 18\mu m$. It is designed to provide spectral equalisation and system management over 5 channels spaced by approximately 4nm as shown in Figure 2.

In a real wavelength diision multiplexing system, input channel power will vary owing to:

> (i) non-uniform gain profiles of the optical amplifiers (e.g. 6.1dB for the EDFA shown in Figure 2);
> (ii) wavelength dependence of passive optical components: and,
> (iii) potential variation in injection losses and signal path losses (e.g. spanning drop and insert nodes in a wavelength routed network.)

In this experimental configuration, input channel variation is simulated by the variable output power tunable diode laser 1. It would be desirable to input all signal. channels simultaneously, but this was not possible with the equipment available. Low signal powers are used to obtain maximum differential gain available from the EDFA, hence overcoming the present high loss of the filter and producing a net gain. The spectral equaliser comprises a reconfigurable holographic filter of the type described in the paper by M.C. Parker and R.J. Mears, "Digitally tunable wavelength filter and laser". *Photonics Technology Letters*, 8 (8), 1996, and an EDFA to compensate for the filter losses. The holographic filter comprises a FLC pixellated spatial light modulator (SLM) displaying dynamic holograms, in conjunction with a fixed binary-phase high spatial frequency grating, both within a 4$f$free-space lensing system (see Figure 1). The filter passband for each channel has a FWHM of just under 2nm. The holograms are designed to compensate both for the input channel power variation and the spectral dependence of the EDFA gain, so that uniform output channel powers are achieved. As shown, it is also possible to drop a particular channel, such as that at 1556.1nm, which is desirable for noise suppression when that channel is temporarily unused. In the figures, the active reconfigurable nature of the equaliser is demonstrated by a variation of both the input power and wavelength of the signal on channel 4, to simulate the signal on that channel coming from a different source, in the network. Two different holograms were designed to compensate for these changes, and to equalise the signal on channel 4 to the same level as the other three signals. The optical spectrum analyser records the results.

The holograms required to compensate a set of input channel variations and conditions, such as change of use of channels for network restoration), are pre-calculated. The download time here is 5ms, but with an improved interface it is reasonable to expect reconfiguration in 20$\mu$s.

The equation relating the filter wavelength associated with a hologram spatial period is given approximately by:

$$\lambda \approx \frac{x}{f(\frac{n}{ND} + \frac{1}{d})} \qquad (1)$$

where $\lambda$ is the filter wavelength, $x = 8.5$mm is the distance of the output fibre from the optical axis, $f = 96.1$mm is the focal length, $N = 128$ is the number of pixels in the spatial light modulator, $D = 165\mu$m is the spatial light modulator pixel pitch, $d = 18\mu$m is the period of the fixed grating. The value n is an integer between 0 and 64. The factor $n/ND$ represents one of the spatial frequencies of the displayed hologram which dictate the wavelengths to be filtered. In contrast to the case in which only a single wavelength is filtered, requiring a single result for $n$ and subsequent hologram design, the above equation has been solved for 5 separate wavelengths, yielding 5 values of $n$ to be fed into a computer-based design process to produce a hologram of mixed spatial frequency. The hologram generation algorithm makes use of simulated annealing, which is modified to control the transmission amplitude of the hologram at multiple wavelengths.

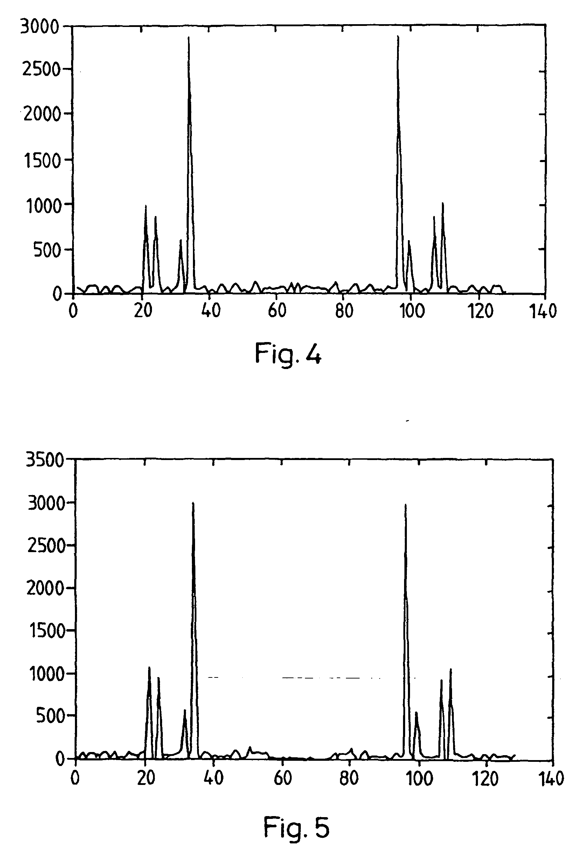

The resulting Fourier transforms (modulus squared) of holograms are shown graphically in Figures 4 and 5. It is apparent from the Fourier transforms of' these holograms, which are representations of the spectral transmissions, that 4 positions (or wavelengths) are preferentially transmitted by varying degrees. Equation (1) above is simply used to determine the positions of the 'spots' in the target function, which is then fed into a simulated annealing algorithm. The algorithm generates a hologram, whose Fourier transform matches the target function as closely as possible.

In the examples, a hologram is generated which equalises the wavelengths at 1548, 1552, 1560 and 1564nm. For $f = 96.1$mm, $x = 8.5$mm, $N = 128$, $D = 18\mu$m, the corresponding values for $n$ are 33,30,23,20. where only integer values of n are allowed for this particular hologram generation algorithm.

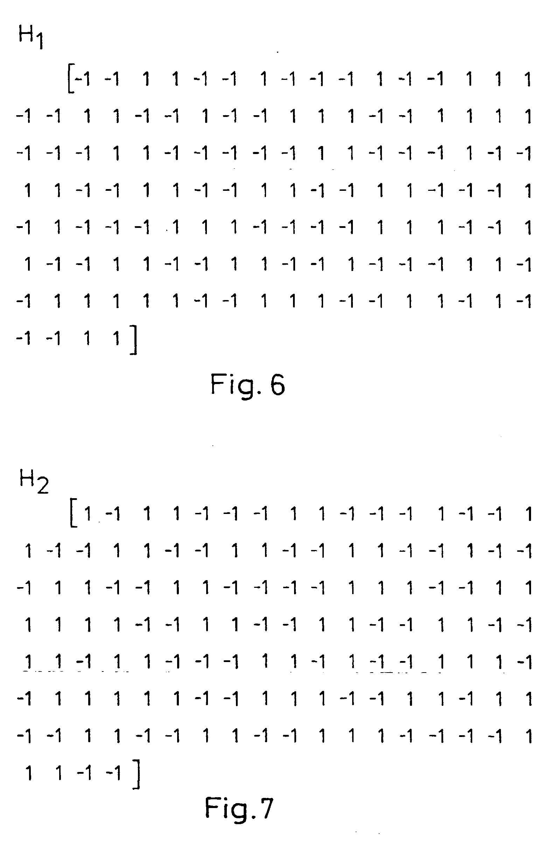

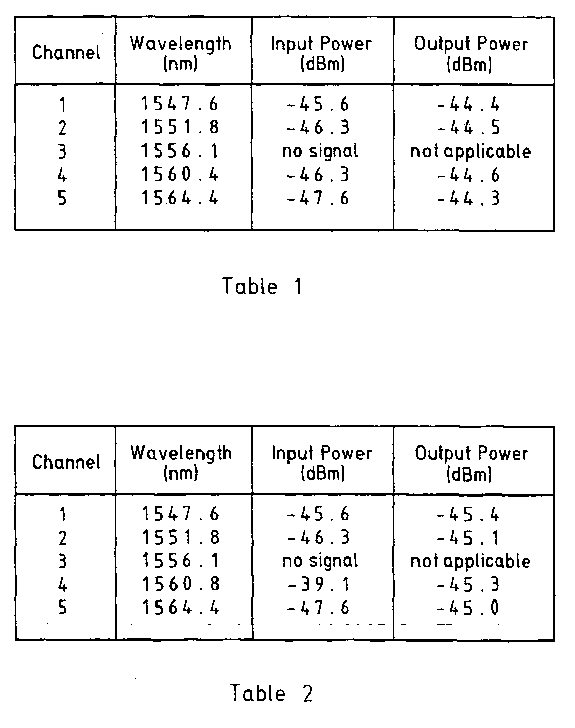

This means that the target function is a 1 x 64 matrix of zeros, except that at the positions 20,23,30 and 13 of the matrix, there are values, corresponding to the design amplitudes of the holographic transmission spectrum. In this case, the corresponding design amplitudes at these positions were 1.31, 1.22, 1, 2.17 respectively. The resulting two holograms are shown in Figures 6 and 7, respectively.

Initial design amplitudes for the holographic transmission spectrum are determined by inverting the ratios of the EDFA amplified spontaneous emission (ASE) levels at the channel wavelengths (see Figure 2). These design parameters yield holograms with less than ideal channel equalisation due to system non-uniformities. The resulting systematic errors observed in the output spectrum were measured and corrected design parameters fed back to the algorithm. Hologram design would be significantly improved by an in-situ feedback loop.

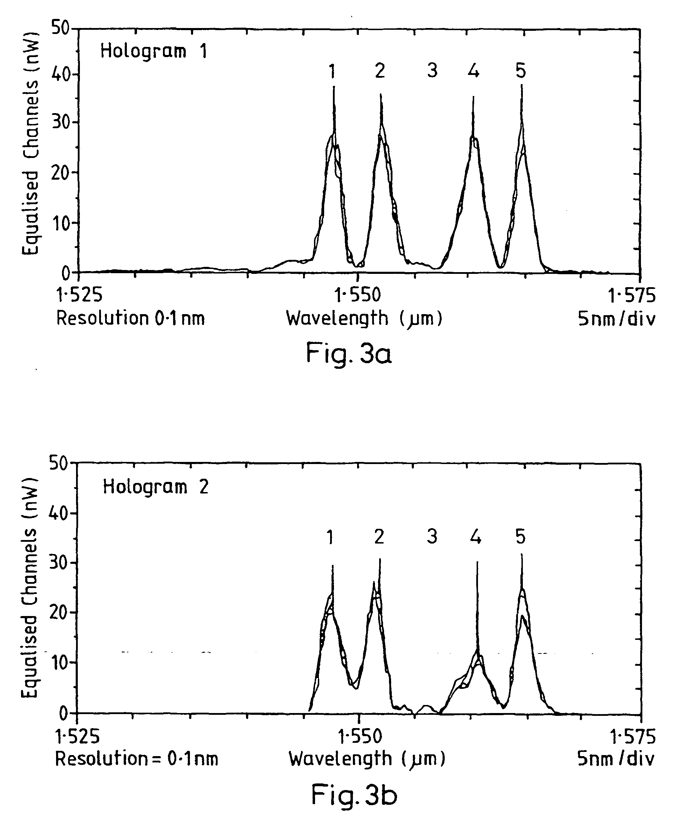

The equalised spectra for the two different holograms are shown in Figure 3. For the first case (see Figure 3a), the unequalled input signals have a 2.0dB range of powers, which is reduced to less than 0.3dB after equalisation. For the second case, the input signal powers have a range of 8.5dB which is reduced to 0.3dB after equation. Tables 1, and 2 show the input and output powers for the 5 channels, using the 2 holograms respectively to equalise the 4 signals dynamically. The unused channel 3 is suppressed by greater than 13.5dB in both cases. The large EDFA ASE present around the wavelength 1.533$\mu$m is also successfully suppressed by at least 13.5dB. The individual channel isolation varies from 6.7dB to as high as 23dB.

## Claims

1. A spectral equaliser (13) for an optical communication system comprising a number of optical inputs (10), a number of optical outputs (12), and a reconfigurable holographic filter (17) arranged in an optical path between the optical inputs (10) and the optical outputs (12), **characterised in that** the reconfigurable holographic filter (17) is configurable to provide signal power equalisation for a number of optical signals or signal channels of predetermined different wavelengths.

2. A spectral equaliser according to claim 1, **characterised in that** at least one optical signal receivable at the reconfigurable holographic filter (17) is a multiplexed optical signal comprising two or more channels.

3. A spectral equaliser according to claim 1 or 2, **characterised in that** the reconfigurable holographic filter (17) is configurable to drop one or more optical signals or individual channels within a multiplexed optical signal.

4. A spectral equaliser according to any preceding claim, comprising two or more optical inputs, **characterised in that** the reconfigurable holographic filter (17) may be configured to transmit signals from at least two different optical inputs to an optical output.

5. A spectral equaliser according to any preceding claim, comprising a plurality of optical outputs, **characterised in that** the reconfigurable holographic filter (17) is configurable to broadcast one or more optical signals or signal channels to two or more of the optical outputs.

6. A spectral equaliser according to any preceding claim, **characterised in that** the reconfigurable holographic filter (17) comprises a dynamic holographic diffraction element in combination with a fixed diffraction grating or hologram.

7. A spectral equaliser according to any preceding claim, **characterised in that** it comprises processing means storing a number of predetermined holograms.

8. A spectral equaliser according to any preceding claim, **characterised in that** it comprises processing means for dynamically determining holograms for the reconfigurable holographic filter to achieve signal power equalisation.

9. A spectral equaliser according to any preceding claim, **characterised in that** it further comprises an optical amplifier (8).

10. A spectral equaliser according to claim 9, **characterised in that** the optical amplifier (8) is an erbium-doped fibre amplifier.

11. A spectral equaliser according to any preceding claim, **characterised in that** the holographic filter (17) is configurable to suppress amplified spontaneous emissions.

12. A communication system comprising a spectral equaliser in accordance with any preceding claim.

13. An optical switch comprising a spectral equaliser in accordance with any of claims 1 to 12.

14. A system comprising a reconfigurable holographic filter and processing means adapted for storing data on a number of predetermined holograms for configuring the holographic filter, at least one of said holograms being arranged to provide signal power equalisation for a number of optical signals or signal channels of predetermined different wavelengths.

**Patentansprüche**

1. Spektraler Entzerrer (13) für ein optisches Kommunikationssystem, der eine Anzahl von optischen Eingängen (10), eine Anzahl von optischen Ausgängen (12) und ein rekonfigurierbares holographisches Filter (17) aufweist, das in einem optischen Weg zwischen den optischen Eingängen (10) und den optischen Ausgängen (12) angeordnet ist, **dadurch gekennzeichnet,** **daß** das rekonfigurierbare holographische Filter (17) so konfigurierbar ist, daß es für eine Anzahl von optischen Signalen oder Signalkanälen vorbestimmter unterschiedlicher Wellenlängen eine Signalleistungsentzerrung bewirkt.

2. Spektraler Entzerrer nach Anspruch 1, **dadurch gekennzeichnet,** **daß** mindestens ein optisches Signal, das an dem rekonfigurierbaren holographischen Filter (17) empfangen werden kann, ein gemultiplextes optisches Signal ist, das zwei oder mehr Kanäle aufweist.

**3.** Spektraler Entzerrer nach Anspruch 1 oder 2,
**dadurch gekennzeichnet,**
**daß** das rekonfigurierbare holographische Filter (17) so konfigurierbar ist, daß es ein oder mehr optische Signale oder einzelne Kanäle innerhalb eines gemultiplexten optischen Signals fallen läßt.

**4.** Spektraler Entzerrer nach einem der vorhergehenden Ansprüche, der zwei oder mehr optische Eingänge aufweist,
**dadurch gekennzeichnet,**
**daß** das rekonfigurierbare holographische Filter (17) so konfiguriert werden kann, daß es Signale von mindestens zwei verschiedenen optischen Eingängen an einen optischen Ausgang überträgt.

**5.** Spektraler Entzerrer nach einem der vorhergehenden Ansprüche, der eine Vielzahl von optischen Ausgängen aufweist,
**dadurch gekennzeichnet,**
**daß** das rekonfigurierbare holographische Filter (17) so konfigurierbar ist, daß es ein oder mehr optische Signale oder Signalkanäle an zwei oder mehr von den optischen Ausgängen sendet.

**6.** Spektraler Entzerrer nach einem der vorhergehenden Ansprüche,
**dadurch gekennzeichnet,**
**daß** das rekonfigurierbare holographische Filter (17) ein dynamisches holographisches Beugungselement in Kombination mit einem fest angeordneten Beugungsgitter oder Hologramm aufweist.

**7.** Spektraler Entzerrer nach einem der vorhergehenden Ansprüche,
**dadurch gekennzeichnet,**
**daß** er eine Verarbeitungseinrichtung aufweist, die eine Anzahl von vorbestimmten Hologrammen speichert.

**8.** Spektraler Entzerrer nach einem der vorhergehenden Ansprüche,
**dadurch gekennzeichnet,**
**daß** er eine Verarbeitungseinrichtung zur dynamischen Bestimmung von Hologrammen für das rekonfigurierbare holographische Filter aufweist, um eine Signalleistungsentzerrung zu erzielen.

**9.** Spektraler Entzerrer nach einem der vorhergehenden Ansprüche,
**dadurch gekennzeichnet,**
**daß** er ferner einen optischen Verstärker (8) aufweist.

**10.** Spektraler Entzerrer nach Anspruch 9,
**dadurch gekennzeichnet,**
**daß** der optische Verstärker (8) ein Erbium-dotierter Faserverstärker ist.

**11.** Spektraler Entzerrer nach einem der vorhergehenden Ansprüche,
**dadurch gekennzeichnet,**
**daß** das holographische Filter (17) so konfigurierbar ist, daß es verstärkte Spontanemissionen unterdrückt.

**12.** Kommunikationssystem, das einen spektralen Entzerrer nach einem der vorhergehenden Ansprüche aufweist.

**13.** Optischer Schalter, der einen spektralen Entzerrer nach einem der Ansprüche 1 bis 12 aufweist.

**14.** System, das ein rekonfigurierbares holographisches Filter und eine Verarbeitungseinrichtung aufweist, die zum Speichern von Daten über eine Anzahl von vorbestimmten Hologrammen zum Konfigurieren des holographischen Filters ausgebildet ist, wobei mindestens eines von den Hologrammen so angeordnet ist, daß es für eine Anzahl von optischen Signalen oder Signalkanälen vorbestimmter unterschiedlicher Wellenlängen eine Signalleistungsentzerrung bewirkt.

**Revendications**

**1.** Un égaliseur spectral (13) pour un système de communication optique, comprenant un certain nombre d'entrées optiques (10), un certain nombre de sorties optiques (12) et un filtre holographique reconfigurable (17), agencé dans un chemin optique entre les entrées optiques (10) et les sorties optiques (12), **caractérisé en ce que** le filtre holographique reconfigurable (17) est configurable pour fournir une égalisation de la puissance de signal pour un certain nombre de signaux optiques ou de canaux de signaux ayant des longueurs d'ondes différentes prédéterminées.

2. Un égalisateur spectral selon la revendication 1, **caractérisé en ce qu'**au moins un signal optique, pouvant être reçu au niveau du filtre holographique reconfigurable (17), est un signal optique multipleké, comprenant deux canaux ou plus.

3. Un égalisateur spectral selon la revendication 1 ou 2, **caractérisé en ce que** le filtre holographique reconfigurable (17) est configurable pour éliminer un ou plusieurs signaux optiques ou canaux individuels dans un signal optique multiplexé.

4. Un égalisateur spectral selon l'une quelconque des revendications précédentes, comprenant deux entrées optiques ou plus, **caractérisé en ce que** le filtre holographique reconfigurable (17) peut être configuré pour transmettre des signaux depuis au moins deux entrées optiques différentes vers une sortie optique.

5. Un égalisateur spectral selon l'une quelconque des revendications précédentes, comprenant une pluralité de sorties optiques, **caractérisé en ce que** le filtre holographique reconfigurable (17) est configurable pour diffuser un ou plusieurs signaux optiques, ou canaux de signaux, optiques vers deux sorties optiques ou plus.

6. Un égalisateur spectral selon l'une quelconque des revendications précédentes, **caractérisé en ce que** le filtre holographique reconfigurable (17) comprend un élément de diffraction holographique dynamique en combinaison avec un réseau de diffraction ou hologramme fixe.

7. Un égalisateur spectral selon l'une quelconque des revendications précédentes, **caractérisé en ce qu'**il comprend des moyens de traitement, stockant un certain nombre d'hologrammes prédéterminés.

8. Un égalisateur spectral selon l'une quelconque des revendications précédentes, **caractérisé en ce qu'**il comprend des moyens de traitement, pour déterminer dynamiquement des hologrammes, pour que le filtre holographique reconfigurable effectue une égalisation de puissance du signal.

9. Un égalisateur spectral selon l'une quelconque des revendications précédentes, **caractérisé en ce qu'**il comprend en outre un amplificateur optique (8).

10. Un égalisateur spectral selon la revendication 9, **caractérisé en ce que** l'amplificateur optique (8) est un amplificateur à fibre dopée à l'erbium.

11. Un égalisateur spectral selon l'une quelconque des revendications précédentes, **caractérisé en ce que** le filtre holographique (17) est configurable, pour supprimer des émissions spontanées amplifiées.

12. Un système de communication comprenant un égalisateur spectral selon l'une quelconque des revendications précédentes.

13. Un commutateur optique, comprenant un égalisateur spectral selon l'une quelconque des revendications 1 à 12.

14. Un système comprenant un filtre holographique reconfigurable et des moyens de traitement, adaptés pour stocker des données sur un certain nombre d'hologrammes prédéterminés, pour configurer le filtre holographique, au moins l'un desdits hologrammes étant agencé pour fournir une égalisation de puissance de signal pour un certain nombre de signaux optiques ou de canaux de signaux, ayant des longueurs d'ondes différentes prédéterminées.

Fig. 1

Fig. 2

Fig. 3a

Fig. 3b

Fig. 4

Fig. 5

$H_1$

$$\begin{bmatrix}
-1 & -1 & 1 & 1 & -1 & -1 & 1 & -1 & -1 & -1 & 1 & -1 & -1 & 1 & 1 & 1 \\
-1 & -1 & 1 & 1 & -1 & -1 & 1 & -1 & -1 & 1 & 1 & 1 & -1 & -1 & 1 & 1 & 1 & 1 \\
-1 & -1 & -1 & 1 & 1 & -1 & -1 & -1 & -1 & -1 & 1 & 1 & -1 & -1 & -1 & 1 & -1 & -1 \\
1 & 1 & -1 & -1 & 1 & 1 & -1 & -1 & 1 & 1 & -1 & -1 & 1 & 1 & -1 & -1 & -1 & 1 \\
-1 & 1 & -1 & -1 & -1 & 1 & 1 & 1 & -1 & -1 & -1 & -1 & 1 & 1 & 1 & -1 & -1 & 1 \\
1 & -1 & -1 & 1 & 1 & -1 & -1 & 1 & 1 & -1 & -1 & 1 & -1 & -1 & -1 & 1 & 1 & -1 \\
-1 & 1 & 1 & 1 & 1 & 1 & -1 & -1 & 1 & 1 & 1 & -1 & -1 & 1 & 1 & -1 & 1 & -1 \\
-1 & -1 & 1 & 1
\end{bmatrix}$$

## Fig. 6

$H_2$

$$\begin{bmatrix}
1 & -1 & 1 & 1 & -1 & -1 & -1 & 1 & 1 & -1 & -1 & -1 & 1 & -1 & -1 & 1 \\
1 & -1 & -1 & 1 & 1 & -1 & -1 & 1 & 1 & -1 & -1 & 1 & 1 & -1 & -1 & 1 & -1 & -1 \\
-1 & 1 & 1 & -1 & -1 & 1 & 1 & -1 & -1 & -1 & -1 & 1 & 1 & 1 & -1 & -1 & 1 & 1 \\
1 & 1 & 1 & 1 & -1 & -1 & 1 & 1 & -1 & -1 & 1 & 1 & -1 & -1 & 1 & 1 & -1 & -1 \\
1 & 1 & -1 & 1 & 1 & -1 & -1 & -1 & 1 & 1 & -1 & 1 & -1 & -1 & 1 & 1 & 1 & -1 \\
-1 & 1 & 1 & 1 & 1 & 1 & -1 & -1 & 1 & 1 & 1 & -1 & -1 & 1 & 1 & -1 & 1 & 1 \\
-1 & -1 & 1 & 1 & -1 & -1 & 1 & 1 & -1 & -1 & 1 & 1 & 1 & -1 & -1 & -1 & -1 & 1 \\
1 & 1 & -1 & -1
\end{bmatrix}$$

## Fig. 7

| Channel | Wavelength (nm) | Input Power (dBm) | Output Power (dBm) |
|---------|-----------------|-------------------|--------------------|
| 1 | 1547.6 | -45.6 | -44.4 |
| 2 | 1551.8 | -46.3 | -44.5 |
| 3 | 1556.1 | no signal | not applicable |
| 4 | 1560.4 | -46.3 | -44.6 |
| 5 | 1564.4 | -47.6 | -44.3 |

Table 1

| Channel | Wavelength (nm) | Input Power (dBm) | Output Power (dBm) |
|---------|-----------------|-------------------|--------------------|
| 1 | 1547.6 | -45.6 | -45.4 |
| 2 | 1551.8 | -46.3 | -45.1 |
| 3 | 1556.1 | no signal | not applicable |
| 4 | 1560.8 | -39.1 | -45.3 |
| 5 | 1564.4 | -47.6 | -45.0 |

Table 2